Europäisches Patentamt

European Patent Office

Office européen des brevets

(19)

(11) Veröffentlichungsnummer: **0 158 966**
**B1**

# (12) EUROPÄISCHE PATENTSCHRIFT

(45) Veröffentlichungstag der Patentschrift:
**04.01.89**

(21) Anmeldenummer: **85104329.9**

(22) Anmeldetag: **10.04.85**

(51) Int. Cl.⁴: **B 60 S 1/32**

(54) Scheibenwischer für Land-, Luft- und Seefahrzeuge, insbesondere LKW's und PKW's.

(30) Priorität: **14.04.84 DE 3414181**

(43) Veröffentlichungstag der Anmeldung:
**23.10.85 Patentblatt 85/43**

(45) Bekanntmachung des Hinweises auf die Patenterteilung:
**04.01.89 Patentblatt 89/1**

(84) Benannte Vertragsstaaten:
**CH DE FR GB IT LI NL SE**

(56) Entgegenhaltungen:
**WO-A-80/01155**
**DE-A-2 639 147**
**US-A-4 241 471**

**Lueger Lexikon der Technik, Band 12, Seite 523**

(73) Patentinhaber: **Grübner, Kurt, Birkenhainer Strasse,
D-6464 Linsengericht- Waldrode (DE)**

(72) Erfinder: **Grübner, Kurt, Birkenhainer Strasse,
D-6464 Linsengericht- Waldrode (DE)**

(74) Vertreter: **Munderich, Paul, Dipl.- Ing., Frankfurter
Strasse 84, D-6466 Gründau- Rothenbergen (DE)**

EP 0 158 966 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Scheibenwischer für Land-, Luft- und Seefahrzeuge, insbesondere LKW's und PKW's, für in der Regel gekrümmte Windschutzscheiben mit einem vorbestimmten Schwenkwinkel bis max. ca. 180 Winkelgrade, bestehend aus einem in den Endlagen des Scheibenwischers richtungsumkehrenden Wischermotor, einem mit dem Wellenstummel des Motors verbundenen abklappbaren Wischhebel und einem an den Wischhebel über eine Federbügelkombination angeschlossenen, zumindest einen Wischblatt tragenden Wischarm.

Scheibenwischer dieser Art sind bereits seit langem Stand der Technike (siehe, z. B. die DE-A-2 639 147). Die Wischhebel führen nach LUEGER, rororo, Band 13, Seite 523, 50 bis 70/min. Pendelbewegungen aus, wobei der Antrieb in der Regel zwei Geschwindigkeitsstufen mit 50/min. und 70/min. vorsieht. (Siehe auch LUEGER, LEXIKON DER TECHNIK, Band 12, Deutsche Verlags-Anstalt GmbH, Stuttgart, PAUL KOESSLER et AL: "Lexikon der Fahrzeugtechnik", © 1967, Seite 523, "Scheibenwischer"). Zur Erhöhung der Wirkung des Scheibenwischers werden diese im allgemeinen in Verbindung mit einem Scheibenspüler verwendet, dessen Wasser nach der DE-A-2 904 566 durch einen nach dem Tauchsiederprinzip ausgebildeten Wärmetauscher heizbar und mit flüssigem Scheibenreinigungsmittel versetzbar ist.

Die Anwendung dieser beiden zusätzlichen Hilfen bringt eine Verstärkung der Reinigungsintensität, insbesondere solange das Wischblatt noch neu, d. h. die Wischblattkante noch unbeschädigt ist.

Diese Verhältnisse ändern sich jedoch sehr schnell, wenn beispielsweise ohne Wasser gewischt oder der Scheibenwischer zur Beseitigung einer im Winter oft vorhandenen Eisverkrustung herangezogen wird.

Ein weiteres Problem ist zumindest bei einzelnen Fahrzeugtypen mit stark gekrümmter Scheibe die Einstellung eines möglichst gleichmäßigen Anpreßdruckes des Wischblattes gegen die Scheibe, die im allgemeinen durch die Wischhebel und Wischarm verbindenden Federbügelkombination als gelöst zu betrachten ist.

Trotz dieses relativ hohen Aufwandes können die bekannten Scheibenwischanlagen die insbesondere bei nassen Straßen gegebene Verschmutzung - wie sie z. B. durch ein vorausfahrendes Fahrzeug in starkem Maße verusacht werden kann - nicht ausreichend schnell mit gutem Reinigungsergebnis beseitigen, so daß die Möglichkeit einer Verkehrsgefährdung durch mangelhafte Sichtverhältnisse gegeben sein kann.

Dies gilt insbesondere bei Vorliegen öl- oder silikonhaltiger Schmutzschichten, die die sichtstörende Schlierenbildung fördern.

Diese Schlieren sind zwar bei getrockneter Scheibe in ihrer Auswirkung weniger störend; sie "regenerieren" sich jedoch sehr rasch bei erneut einsetzendem Regen und lassen sich vielfach nicht durch einen sich wiederholenden einfachen Schwenkschub des Wischblattes beseitigen; oft hilft hier nur das Anhalten und das manuelle Abreinigen der Scheibe, z. B. mit Papierservietten.

Diese Sachlage berücksichtigend ist es Aufgabe der vorliegenden Erfindung, einen Scheibenwischer nach der eingangs beschriebenen Art zu nennen, der, außer dem Schwenkschub des Wischblattes über die verschmutzte Scheibe und dem Angriff durch das Spülmittel, durch ergänzende mechanische Mittel zusätzlich auf die Schmutzschicht bzw. die Scheibe einwirkt.

Die erfindungsgemäße Lösung dieser Aufgabe sieht vor,

daß dem Wischblatt oder den Wischblättern, ebenfalls durch den Wischarm getragen und auf der Windschutzscheibe aufliegend, entlang dem oder diesen parallel oder einen Winkel bildend ausgerichtet, eine oder mehrere rotierende Bürstenwalzen und/oder eine oder mehrere Aufreihungen von ineinanderkämmenden Ritzeln oder tangierenden Reibrädern, als Treibräder von Tellerbürsteneinheiten, zugeordnet sind, wobei die zur Scheibe gerichteten Tellerbürsten in abwechselnder Folge, in jeweils entgegengesetztem Drehsinn antreibbar sind, und

daß der Antrieb der Bürstenwalze oder der Tellerbürsteneinheiten entweder durch den Wischermotor über Getriebemittel, jeweils bei Endstellung des Wischhebels in entgegengesetzte Drehrichtung umkehrend, oder aber durch einen separaten Motor, bei gleichbleibender Drehrichtung, antreibbar ist.

Durch die zusätzlich zum Schwenkschub des Wischblattes auf die Schmutzschicht der Scheibe einwirkende Rotationsbewegung der Bürste(n) wird zusätzlich eine Vorlockerung des Schmutzes für das nachfolgende Wischblatt bzw. eine Nachreinigung von verbleibenden Schmutzresten, bei Rückführung des dann vorgeordneten Wischblattes in seine Ausgangslage, erreicht, wobei für den Sporteinsatz (Ralley) als optimal jeweils eine jeder Richtung des Wischblatt-Schwenkantriebes vorgeordnete Bürstenvorrichtung anzusprechen ist.

Die darüberhinaus mögliche Kombination von Bürstenwalzen und Tellerbürsten, fallweise in Verbindung mit einer mehrzahligen Anordnung der Wischblätter, läßt eine Anpassung des Scheibenwischers an die verschiedensten Erfordernisse der Praxis zu.

Die Frage der Zweckmäßigkeit des Antriebes der Bürstenvorrichtung durch den Wischermotor oder durch einen separaten Elektromotor ist unter verschiedenen Aspekten zu beurteilen.

Der Antrieb durch den Wischermotor bedeutet eine Umkehrung der Drehrichtung der Bürste(n) in jeder Endposition der Pendelbewegung des Wischarmes, mit dem Vorteil einer ausgeglichenen Bürstenbeanspruchung, während der separate motorische Antrieb die Aufrechterhaltung eine von der Wischerbewegung unabhängige Drehrichtung beinhaltet und den Vorteil der Einstellung höherer Drehzahlen, jedoch bei einseitiger Beanspruchung der Borsten, ermöglicht.

Die Entscheidung, ob eine Abreinigung durch eine Bürstenwalze oder durch eine Vielzahl gegenläufig sich drehender Tellerbürsten besser bzw. zweckmäßig ist, ist ebenfalls entsprechend den Einsatzbedingungen zu entscheiden, wobei, zumindest vom Aufwand her betrachtet, der Bürstenwalze der Vorzug zu geben ist.

Eine zweckmäßige Ausbildung bei Verwendung einer Bürstenwalze sieht vor,

daß mit dem Wischarm - dem Antrieb des Wischhebels zugerichtet - ein Lagerbügel verbunden ist, der entweder eine durch ein Kegelritzel antreibbare Walzenantriebswelle, die über eine elastische Kupplungsmuffe mit der Bürstenwalze verbunden ist, oder aber den separaten, mit der Bürstenwalze verbundenen, Elektromotor aufnimmt.

Die Anordnung der Antriebsteile oder des separaten Motors für die Bürstenwalze in Nähe des Wischhebelantriebes reduziert das durch das Gewicht dieser Teile für den Schwenktrieb zusätzliche entstehende Moment auf die Wischerantriebswelle.

Die zur Verbindung des Antriebes mit der Bürstenwalze vorgesehene elastische Kupplung verhindert eine Beeinträchtigung des Biegeverhaltens des Scheibenwischers, so daß dieser in Verbindung mit der elastischen Bürstenwalze satt der Scheibe anliegen kann, wobei es zweckmäßig ist,

daß das Ende der Bürstenwalze über einen Wellenstummel in einer am freien Ende des Wischarmes vorgesehenen Lagerung richtungsfixiert ist.

Eine vorteilhafte Anordnung von Tellerbürsten sieht vor,

daß für den separaten Antrieb der Tellerbürsteneinheit, dem Antrieb des Wischhebels zugerichtet, ein mit seinem Antriebsstummel zur Windschutzscheibe weisender Elektromotor mit dem Wischarm fest verbunden ist, und an dem Antriebsstummel ein topfartiges, den Elektromotor partiell einschließendes Stirn-Kronrad befestigt ist, das mit einem Ritzel einer Tellerbürsteneinheit im Eingriff steht.

Die Verwendung eines topfartigen Stirn-Kronrades für den Antrieb der Tellerbürsteneinheiten erlaubt eine gesicherte raumsparende Anordnung des separaten Elektromotors.

Zur Ausbildung und Anordnung der Lagerung der Tellerbürsteneinheiten wird vorgeschlagen,

daß die Wellen der Tellerbürsteneinheiten in einer Tragschiene, bei formschlüssigem Eingriff der Ritzel, gelagert sind, und

daß die Tragschiene in Auflageführungen gehalten ist.

Eine solche Ausbildung ermöglicht eine einfache und schnelle Montage, sowie den Austausch der als Aufreihungen angeordneten Tellerbürsteneinheiten.

Der vorgeschlagene Scheibenwischer wird damit in vollem Umfang den Forderungen der Aufgabenstellung gerecht.

Die Ausführungsbeispiele der mit Wischblatt und einer rotierenden Walzenbürste oder einer Vielzahl rotierender Tellerbürsten ausgerüsteten Scheibenwisch- und Rotatitonsbürsten-Reinigungsvorrichtungen werden durch die beigefügten Zeichnungen näher erläutert, wobei in diesem Zusammenhang wiederholt wird, daß die Beispiele durch weitere, der Bürsteneinrichtung vor- und/oder nachgeordnete Wischblätter ergänzt werden können, oder daß den Wischblättern vor- und/oder nachgeordnete nach- bzw. vorlaufende Bürsteneinrichtungen zuordnungsbar sind.

Figur 1 zeigt eine kombinierte Scheibenwisch- und Rotationsbürsten-Reinigungsvorrichtung mit einer um die Antriebswelle des Wischermotors verschwenkend und rotierend mit entsprechend der Wischblattbewegung stattfindender Drehrichtungsumkehr,angetriebenen Bürstenwalze, die nachstehend einheitlich kurz als "Bürstenwalzenwischer" bezeichnet wird.

Figur 2 zeigt partiell einen Bürstenwalzenwischer mit durch Antrieb eines separaten Elektromotors drehrichtungskonstantem Antrieb der Bürstenwalze.

Figur 3 zeigt den Schnitt I - I aus Figur 1, der mit dem Schnitt II - II aus Figur 2 identisch ist.

Figur 4 zeigt eine kombinierte Scheibenwisch- und Rotationsbürsten-Reinigungsvorrichtung mit einem um die Antriebsachse des Wischermotors verschwenkbaren, mit durch separaten Elektromotor abwechselnd gegenläufig, in jeweils gleichbleibender Drehrichtung angetriebenen Tellerbürsten besetzten Bürstentragarm als Wischarm. Eine nicht gezeichnete weitere Ausführung sieht entsprechend Figur 1 den Antrieb der Tellerbürsten durch den Wischermotor vor; hierbei ist die Umkehrstellung des Wischerarmes jeweils drehrichtungsumkehrend für die Tellerbürsten.

In diesem Fall ist die Spitze des Kegelwinkels des durch die Motorwelle angetriebenen Kegelrades in umgekehrter Richtung, d. h. in Richtung des Wischermotors weisend und die Welle des eingreifenden Kegelritzels parallel zur Achse des Wischermotors ausgerichtet. Sie bildet gleichfalls die Welle des ersten, eine Tellerbürste tragenden Ritzels. (Stirnradantrieb ebenfalls möglich). In der weiteren Beschreibung wird lediglich die Ausführung mit Separat-Antrieb beschrieben und die Vorrichtung einheitlich kurz als "Tellerbürstenwischer" bezeichnet.

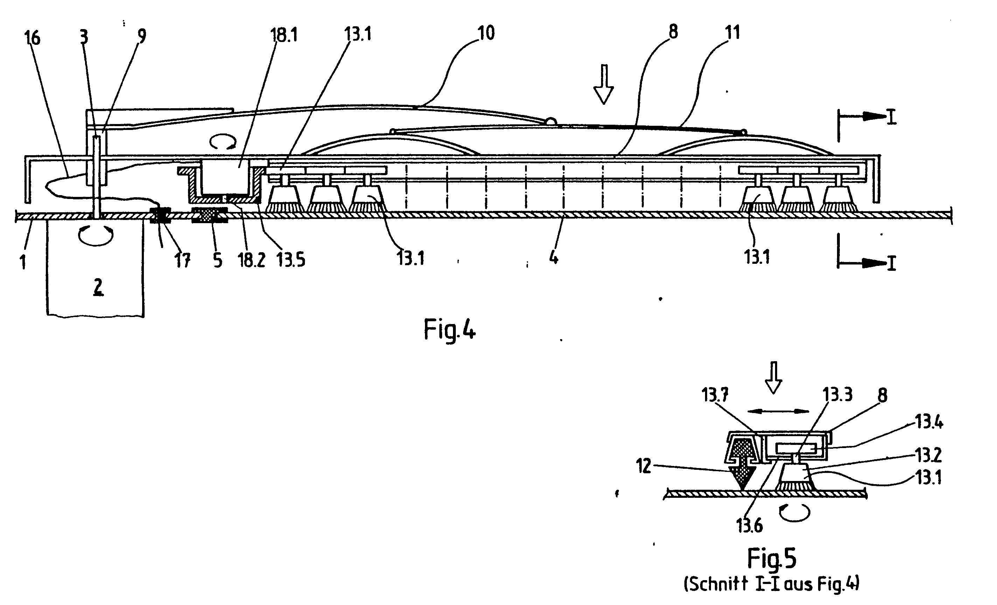

Figur 5 zeigt den Schnitt IV - IV aus Figur 4.

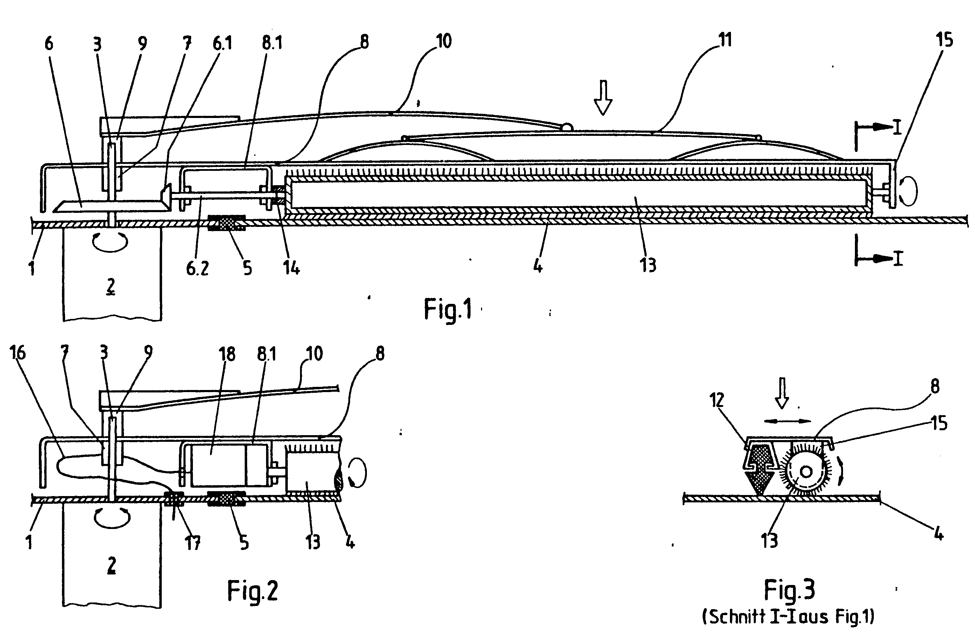

Der Bürstenwalzenwischer, gemäß Figur 1 bis 3, baut auf der durch die Karosseriewand 1 abdichtend geführten Antriebswelle 3 des Wischermotors 2 auf, wobei die Windschutzscheibe 4 durch die Scheibe und Karosse durch ein zueinander abdichtendes elastomeres Verbindungselement 5, unter Einschluß von nicht gezeichneten tragenden bzw. abstützenden Teilen, zusammengefügt ist.

Mit der Antriebswelle 3 sind ausgehend von der Karosserieseite, nach außen gerichtet, nacheinander ein Kegelrad 6, eine Traghülse 7 für den lose aufliegenden, lediglich zentrisch geführten Wischerarm 8 und eine Klemmhülse 9 für den abklappbaren Wischhebel 10 verbunden.

Der Wischhebel 10 ist dabei über eine Federbügelkombination 11 an dem Wischarm 8 befestigt.

Der Wischarm 8 und die von ihm zusätzlich zum Wischblatt 12 getragene Bürstenwalze 13 sind insoweit elastisch, daß eine Anpassung an die Wölbung der Windschutzscheibe 4 durch die Federbügelkombination 11, bei noch ausreichender Steifigkeit, für die ordnungsgemäße Lagerung 15 der Bürstenwalze 13 und des Wischblattes 12 erreicht wird.

Antriebsseitig endet die Bürstenwalze 13 in einer elastischen Kupplungsmuffe 14 zur Verbindung mit dem später beschriebenen Antrieb, der über eine mit dem Wischarm 8 verbundenen Lagerbügel 8.1 geführt ist.

Zur Antriebsausbildung ist zu vermerken, daß ein rechtwinklig zur Antriebswelle 3 in die Verzahnung des Kegelrades 6 eingreifendes Kegelritzel 6.1 vorgesehen ist, das seinerseits, wie erwähnt, in die im Lagerbügel 8.1 geführte Walzenantriebswelle 6.2 überführt und mit der Bürstenwalze 13 elastisch durch die ebenfalls genannte Kupplungsmuffe 14 verbunden ist.

Die durch Figur 3 dargestellte Ausführung der Bürstenwalze 13 mittels separatem Elektromotor 18 sieht dessen Anordnung innerhalb des mit dem Wischarm 8 verbundenen Lagerbügels 8.1 vor. Der zum Elektromotor 18 führende Kabel 16 tritt im Interesse einer geringen Kabelbeanspruchung durch die Schwenkbewegung des Wischarmes 8 so nah als möglich an der Antriebswelle 3 aus der Karosseriewand 1 aus, wobei zur Kabelsicherung die Austrittsöffnung durch eine elastische Muffe 17 ausgekleidet ist.

Durch Figur 4 und 5 wird ein Tellerbürstenwischer mit separatem, vertikal gerichtetem Antriebsmotor 18.1 ausgewiesen, wobei zum ebenfalls möglichen Antrieb durch den Wischermotor 2 auf das zur Figur 4 eingangs gegebene Rubrum aufmerksam gemacht wird.

Grundsätzlich ist einleitend zu der in der Folge beschriebenen Ausführungsform weiter auf gegebene Parallelitäten zu Figur 2 hinsichtlich der Anordnung des Kabels 16 zum Wischermotor 2 und dessen Durchführung über die elastische Muffe 17 zu bemerken, daß der vertikal ausgerichtete Elektromotor 18.1 am Wischarm 8 mit seinem Antriebsstummel 18.2 zur Ebene der Windschutzscheibe 4 gerichtet befestigt ist.

Mit dem Antriebsstummel 18.2 ist ein topfartiges, den Elektromotor 18.1 im wesentlichen aufnehmendes Stirn-Kronrad 13.5 verbunden, in das ein Tellerbürstenritzel 13.4 einer Tellerbürsteneinheit 13.1 eingreift. Die Tellerbürsteneinheit 13.1 besteht aus der mit einer zentralen Tellerbürstenwelle 13.3 versehenen Tellerbürste 13.2, wobei die Welle 13.3 entgegen der Tellerbürste 13.2 durch das Ritzel 13.4 abgegrenzt ist.

Die Tellerbürsteneinheiten 13.1 sind mit ihren Wellen 13.3 in einer Tragschiene 13.6 so gelagert, daß alle in Reihe angeordneten Ritzel 13.4 ineinandergreifen und nach vollständigem Einschub der Tragschiene 13.6 in die Auflageführungen 13.7 ein durchgehender Formschluß aller Tellerbürstenritzel 13.4 mit dem topfartigen stirn-Kronrad 13.5 gebildet ist.

**Patentansprüche**

1. Scheibenwischer für Land-, Luft- und Seefahrzeuge, insbesondere LKW's und PKW's, für in der Regel gekrümmte Windschutzscheiben (4) mit einem vorbestimmten Schwenkwinkel bis max. ca. 180 Winkelgrade, bestehend aus einem in den Endlagen des Scheibenwischers richtungsumkehrenden Wischermotor (2), einem mit dem Wellenstummel (3) des Motors (2) verbundenen abklappbaren Wischhebel (10) und einem an den Wischhebel (10) über eine Federbügelkombination angeschlossenen, zumindest ein Wischblatt (12) tragenden Wischraum (8), dadurch gekennzeichnet,

daß dem Wischblatt oder den Wischblättern (12), ebenfalls durch den Wischarm (8) getragen und auf der Windschutzscheibe (4) aufliegend, entlang dem oder diesen parallel oder einen Winkel bildend ausgerichtet, eine oder mehrere rotierende Bürstenwalzen (13) und/oder eine oder mehrere Aufreihungen von ineinanderkämmenden Ritzeln (13.4) oder tangierenden Reibrädern, als Treibräder von Tellerbürsteneinheiten (13.1), zugeordnet sind, wobei die zur Windschutzscheibe (4) gerichteten Tellerbürsten (13.2) in abwechselnder Folge, in jeweils entgegengesetztem Drehsinn antreibbar sind, und

daß der Antrieb der Bürstenwalze (13) oder der Tellerbürsteneinheiten (13.1) entweder durch den Wischermotor (2) über Getriebemittel (6, 6.1, 6.2), jeweils bei Endstellung des Wischhebels (10) in entgegengesetzte Drehrichtung umkehrend, oder aber durch einen separaten Motor (18, 18.1), bei gleichbleibender Drehrichtung, antreibbar ist.

2. Scheibenwischer nach Ahspruch 1, dadurch gekennzeichnet,

daß mit dem Wischarm (8) - dem Antrieb des Wischhebels (10) zugerichtet - ein Lagerbügel (8.1) verbunden ist, der entweder eine durch ein Kegelritzel (6.1) antreibbare Walzenantriebswelle (6.2), die über eine elastische Kupplungsmuffe (14) mit der Bürstenwalze (13) verbunden ist, oder aber den separaten, mit der Bürstenwalze verbundenen, Elektromotor (18) aufnimmt.

3. Scheibenwischer nach Anspruch 1, dadurch gekennzeichnet,

daß für den separaten Antrieb der Tellerbürsteneinheiten (13.1), dem Antrieb des Wischhebels (10) zugerichtet,

ein mit seinem Antriebsstummel zur Windschutzscheibe (4) weisender Elektromotor (18.1) mit dem Wischarm (8) fest verbunden ist, und an dem Antriebsstummel ein topfartiges, den Elektromotor (18.1) partiell einschließendes Stirn-Kronrad (13.5) befestigt ist, das mit einem Ritzel (13.4) einer Tellerbürsteneinhelt (13.1) im Eingriff steht.

4. Scheibenwischer nach Anspruch 1 und 2, dadurch gekennzeichnet,

daß das Ende der Bürstenwalze (13) über einen Wellenstummel in einer am freien Ende des Wischarmes (8) vorgesehenen Lagerung (15) richtungsfixiert ist.

5. Scheibenwischer nach den Ansprüchen 1 und 3, dadurch gekennzeichnet,

daß die Wellen (13.3) der Tellerbürsteneinheiten (13.1) in einer Tragschiene (13.6) bei formschlüssigem Eingriff der Ritzel (13.4) gelagert sind, und,

daß die Tragschiene (13.6) in Auflageführungen (13.7) gehalten ist.

## Claims

1. A windshield wiper for land, air and sea-craft, especially for use with motor lorries and private cars, for windshields (4) usually curved and having a predetermined pivot angle of up to about 180 angular degrees, comprising a wiper motor (2) causing a reversal of direction in the end positions of the windshield wiper, a removable wiper lever (10) connected to the shaft butt (3) of motor (2) and a wiper arm (8) connected through a spring U-bolt combination to the wiper lever (10) and carrying at least one wiper blade (12),

characterized in

that associated to the wiper blade or the wiper blades (12) equally carried by wiper arm (8) and superposed on the windshield (4) along or in parallel to or in alignment therewith, forming an angle, are one or more rotting brush rolls (13) and/or one or more rows of meshing pinions (13.4) or tangent friction wheels as drive wheels for disc-type brush units (13.1), with the disc-type brushes (13.2) facing the windshield (4), alternately, being drivable in the respectively opposite sense of rotation, and that the drive of the brush roll (13) or of the disc-type brush units (13.1) is actuable either through the wiper motor (2) via drive means (6, 6.1, 6.2), respectively reversing the sense of rotation in the end position of the wiper lever (10), or through a separate motor (18, 18.1), with the sense of rotation remaining the same.

2. A windshield wiper according to claim 1, characterized in

that connected to the wiper arm (8), in a manner facing the drive of the wiper lever (10), is a spring U-bolt (8.1) which receives either a roll driving shaft (6.2) drivable by a conical pinion (6.1) and connected through a flexible coupling sleeve (14) to the brush roll (13), or which receives the separate electric motor (18) connected to the brush roll.

3. A windshield wiper according to claim 1, characterized in

that, for the separate drive of the disc-type brush units (13.1), in a manner facing the wiper lever (10)

an electric motor (18.1) facing with the drive butt thereof the windshield (4), is rigidly connected to the wiper arm (8), and secured to the drive butt is a cup-shaped front crown wheel (13.5) partially enclosing the electric motor (18.1) and being in engagement with a pinion (13.4) of a disc-type brush unit (13.1).

4. A windshield wiper according to claims 1 and 2, characterized in

that the end of the brush roll (13), through a shaft butt, is directionally fixed in a bearing (15) provided on the free end of the wiper arm (8).

5. A windshield wiper according to claims 1 and 3, characterized in

that the shafts (13.3) of the disc-brush units (13.1) are disposed in a base rail (13.6), with the pinions (13.4) in form-locking engagement and that the base rail (13.6) is held in bearing guides (13.7).

## Revendications

1. Essuie-glace pour véhicules routiers, aéronefs et navires, en particulier pour camions et voitures particulières, pour pare-brises (4) en général courbes, avec un angle d'oscillation prédéterminé allant jusqu'à 180 degrés d'angle au maximum environ, composé d'un moteur d'essuie- glace (2) à inversion de sens dans la position finale de l'essuie-glace, d'un levier d'essuie-glace (10) rabattable relié au bout d'arbre (3) du moteur (2), et d'un bras d'essuie-glace (8) relié au levier d'essuie-glace (10) par l'intermédiaire d'un ensemble d'étriers élastiques et portant au moins un balai d'essuie-glace (12), caractérisé par le fait qu'une ou plusieurs brosses cylindriques tournantes (13) et/ou une ou plusieurs unités de brosses rondes (13.2), chaque unité étant entraînée par une série de pignons (13.4) engrenant les uns avec les autres ou de roues de friction tangentes, sont associées au(x) balais d'essuie-glace (12), sont également portées par le bras d'essuie-glace (8), et reposent sur le pare-brise (4) en étant dirigées parallèlement au(x) balais ou en formant un angle, les brosses rondes (13.2) dirigées vers le pare-brise (4) pouvant être entraînées alternativement dans des sens opposés, et par le fait que l'entraînement des brosses cylindriques (13) ou des unités de brosses rondes (13.1) peut être entraîné, soit par le moteur de l'essuie-glace (2) par l'intermédiaire de moyens à engrenage (6, 6.1, 6.2), en passant au sens de rotation opposé dans la position finale du levier d'essuie- glace (10), ou encore par un moteur séparé (18, 18.1), le sens de rotation restant le même.

2. Essuie-glace selon la revendication 1, caractérisé par le fait qu'un étrier de palier (8. 1) disposé près de l'entraînement du levier d'essuie-glace (10) est relié au bras d' essuie-glace (8) et reçoit, soit un arbre (6.2) d'entraînement des cylindres qui peut être entraîné par un pignon conique (6.1) et qui est relié à la brosse cylindrique (13) par l'intermédiaire d'un manchon élastique d'accouplement (14), soit encore le moteur électrique séparé (18) relié à la brosse cylindrique.

3. Essuie-glace selon la revendication 1, caractérisé par le fait que, pour l'entraînement séparé des unités de brosses rondes (13.1), un moteur électrique (18.1) disposé près de l'entraînement du levier d'essuie-glace (10) et orienté par son bout d'arbre d'entraînement vers le pare- brise (4) est relié rigidement au bras d'essuie-glace (8), et que sur le bout d'arbre d'entraînement est fixée une roue à couronne frontale (13.5) en forme de pot qui enferme partiellement le moteur électrique (18.1) et qui est en prise avec un pignon (13.4) d'une unité de brosse rondes (13.1).

4. Essuie-glace selon la revendication 1 et 2, caractérisé par le fait que l'extrémité de la brosse cylindrique (13) est fixée en direction par l'intermédiaire d'un bout d'arbre dans un palier (15) qui est prévu à l'extrémité libre du bras d'essuie-glace (8).

5. Essuie-glace selon les revendications 1 et 3, caractérisé par le fait que les arbres (13.3) des unités de brosses rondes (13.1) sont montés en rotation dans un rail porteur (13.6), les pignons (13.4) étant en prise par conjugaison de formes, et par le fait que le rail porteur (13.6) est maintenu dans des guidages d'appui (13.7).

Fig.1

Fig.2

Fig.3
(Schnitt I–I aus Fig.1)

EP 0 158 966 B1

Fig.4

EP 0 158 966 B1

Fig.5
(Schnitt I–I aus Fig.4)